# EUROPÄISCHE PATENTSCHRIFT

(11) **EP 1 263 207 B1**
(45) Veröffentlichungstag und Bekanntmachung des Hinweises auf die Patenterteilung: **12.05.2004**
(21) Anmeldenummer: 01112544.0
(22) Anmeldetag: 23.05.2001
(51) Int. Cl.: H04N 1/31, H04N 1/14, G02B 26/10, H04N 1/10

(54) **Linearantrieb für eine optische Abtasteinheit**
Linear drive for optical scanning unit
Entrainement linéaire pour système optique de balayage

(43) Veröffentlichungstag der Anmeldung: 04.12.2002
(73) Patentinhaber: Agfa-Gevaert AG, 51373 Leverkusen (DE)
(72) Erfinder: Stahl, Werner., 85551 Kircheim (DE); Gebele, Herbert., 82054 Sauerlach (DE)

(56) Entgegenhaltungen:
- WO-A-00/31587
- CH-A- 677 633
- DE-A- 2 630 059
- US-A- 5 598 739
- US-A- 5 905 257
- US-A- 6 005 685

## Beschreibung

Die vorliegende Erfindung betrifft einen Linearantrieb für eine optische Abtasteinheit, umfassend einen Motor mit einer Ausgangswelle, eine Seilantriebsvorrichtung, die ein Seil umfaßt und die derart mit dem Motor gekoppelt ist, daß eine rotatorische Bewegung der Ausgangswelle des Motors in eine lineare Bewegung des Seils umgesetzt wird; und mindestens eine Kopplungsvorrichtung, mit der das Seil mit einer optischen Abtasteinheit gekoppelt werden kann, so daß eine Bewegung des Seils in eine Bewegung der optischen Abtasteinheit umgesetzt werden kann.

Derartige Linearantriebe sind bekannt und werden zur Erzielung einer hohen Konstanz der Vorschubgeschwindigkeit mit einem geregelten Direktantrieb als Antrieb für die Seilantriebsvorrichtung realisiert. Diese bekannten Linearantriebe sind jedoch teuer und für manche Anwendungen zu groß. Gattungsgemäße Linearantriebe werden unter anderem auch für den Einbau in unterschiedlichen Röntgenanlagen verwendet. Speziell für diesen Einsatzzweck muß die Größe sehr klein gehalten werden. So sind die aus dem Stand der Technik bekannten Linearantriebe mit geregeltem Direktantrieb nicht geeignet, da sie zu groß sind. Beispiele für Einsatzgebiete von Linearantrieben sind der EP 0 518104 sowie der DE 197 52 925 zu entnehmen.

Aus der US 5 905 257 A sowie der US 6 005 685 A sind Flachbettscanner bekannt, bei denen die Abtasteinheit über Riemen bzw. Seilzüge angetrieben wird.

Darüber hinaus ist ein Linearantrieb mit geregeltem Direktantrieb aufgrund der Rückkopplung sehr empfindlich gegenüber äußeren Störungen.

Andere Realisierungen, die das Seil unmittelbar durch einen Motor antreiben, liefern nicht die für bestimmte Anwendungen nötige hohe Konstanz der Vorschubgeschwindigkeit.

Die Aufgabe der vorliegenden Erfindung besteht deshalb darin, einen Linearantrieb der eingangs genannten Art derart weiterzubilden, daß er bei kompakter und kostengünstiger Bauweise eine hohe Konstanz der Vorschubgeschwindigkeit ermöglicht.

Diese Aufgabe wird erfindungsgemäß dadurch gelöst, daß der gattungsgemäße Linearantrieb weiterhin ein Reibradgetriebe umfaßt, das eingangsseitig mit der Ausgangswelle des Motors und ausgangsseitig mit der Seilantriebsvorrichtung gekoppelt ist.

Der Erfindung liegt die Erkenntnis zugrunde, daß aufgrund des hohen Drehmoments eines Reibradgetriebes und dessen Unempfindlichkeit gegen Drehmomentschwankungen ein starkes Seil ruhig geführt werden kann. Dies führt zu einer sehr steifen Führung der optischen Abtasteinheit. Auf die optische Abtasteinheit von außen oder durch mitzuschleppende Kabel wirkende Kräfte, beispielsweise durch Erschütterung der gesamten, den erfindungsgemäßen Linearantrieb umfassenden Anordnung, wirken sich nur gering auf die Konstanz der Vorschubgeschwindigkeit aus. Durch die erfindungsgemäße Maßnahme lassen sich Vorschubgeschwindigkeiten mit Schwankungen kleiner 0,5 % realisieren. Bevorzugt läuft das Reibradgetriebe in einem Ölbad und dadurch praktisch verschleißfrei. Darüber hinaus wird durch das Reibradgetriebe ein Leichtbau ermöglicht, wie er bisher aus dem Stand der Technik nicht bekannt ist.

Bei einer bevorzugten Ausführungsform weist das Reibradgetriebe eine Eingangswelle auf, und der Linearantrieb weist ein bandförmiges Element auf, mit dem die Ausgangswelle des Motors und die Eingangswelle des Reibradgetriebes derart gekoppelt sind, daß eine Rotation der Ausgangswelle des Motors in eine Rotation der Eingangswelle des Reibradgetriebes umgesetzt wird. Durch die Verwendung eines bandförmigen Elements, beispielsweise eines elastischen Riemens, werden Drehzahlschwankungen des Motors zusätzlich ausgefiltert, so daß insgesamt eine weitere Verbesserung der Konstanz der Vorschubgeschwindigkeit ermöglicht wird.

Bevorzugt weist das Reibradgetriebe mehrere Reibräder auf, wobei mindestens ein Reibrad, insbesondere das auf der Eingangswelle des Reibradgetriebes angeordnete Reibrad, als Schwungrad ausgebildet ist. Bei dieser Ausführungsform werden bei genügend hoher Drehzahl der Schwungscheibe, aufgrund von deren Massenträgheitsmoment, Drehzahlschwankungen des Motors, die über das elastische Element auf das Schwungrad übertragen werden, weiter reduziert. Dies resultiert ebenfalls in einer weiteren Verbesserung der Konstanz der Vorschubgeschwindigkeit. Als besonders günstig erweist es sich, durch geeignete Übersetzung eine hohe Drehzahl der Schwungscheibe zu erreichen, da dadurch die in der Schwungscheibe gespeicherte kinetische Energie anwächst, was eine weitere Reduzierung von Drehzahlschwankungen bedeutet.

Bevorzugt weist der Linearantrieb mindestens zwei Kopplungsvorrichtungen auf, die derart angeordnet sind, daß das Seil mit zwei Seiten der optischen Abtasteinheit gekoppelt werden kann, so daß sich die zwei Seiten in einer Richtung senkrecht zur vorgesehenen Bewegungsrichtung der optischen Abtasteinheit gegenüberliegen. Durch diese Maßnahme wird sichergestellt, daß die optische Abtasteinheit an zwei Seiten durch das Seil gezogen wird, so daß die die Gefahr des Klemmens der optischen Abtasteinheit und damit ungleichmäßiger Bewegung weiter reduziert wird.

Bevorzugt ist jedes Reibrad auf einer Welle angeordnet, wobei mindestens eine, bevorzugt alle Wellen, über einseitig federnd eingespannte Schwinghebel beweglich gelagert sind. Durch diese Maßnahme wird sichergestellt, daß die Reibräder mit einer vorbestimmten Kraft aufeinandergedrückt werden, so daß eine gute Übertragung der Rotation von einem Reibrad auf ein anderes Reibrad stattfindet. Andererseits ermöglicht die federnde Einspannung, daß es zu keinem Klemmen und zu keiner Beschädigung von Reibrädern kommt, beispielsweise durch minimale Durchmesserschwankungen der Reibräder.

Bevorzugt weist das Reibradgetriebe mehrere Reibräder auf, wobei von zwei unmittelbar zusammenwirkenden Reibrädem eines von balliger Form ist. Durch die ballige Ausführung wird erreicht, daß sich die Berührungsfläche auch bei nicht absolut parallelen Reibradachsen definieren läßt. Da die Konstanz der Berührungsfläche maßgeblich ist für die Konstanz der übertragenen Rotation und damit die Konstanz der Vorschubgeschwindigkeit, resultiert diese Maßnahme in einer weiteren Verbesserung.

Bevorzugt weist das Reibradgetriebe eine Ausgangswelle und die Seilantriebsvorrichtung eine Seiltrommel auf, wobei die Seiltrommel derart mit der Ausgangswelle des Reibradgetriebes gekoppelt ist, daß eine rotatorische Bewegung der Ausgangswelle des Reibradgetriebes in eine rotatorische Bewegung der Seiltrommel umgesetzt wird. Dies ermöglicht eine Fixierung des Seils an der Seiltrommel, wobei die Seiltrommel bevorzugt eine schraublinienförmige Nut aufweist, in der das Seil zur Umsetzung einer rotatorischen Bewegung der Seiltrommel in eine lineare Bewegung des Seils führbar ist. Die Nut sorgt dafür, daß es zu keiner Berührung zwischen benachbarten Seilabschnitten kommen kann, was die Konstanz der Vorschubgeschwindigkeit negativ beeinflussen würde.

Bevorzugt weist der erfindungsgemäße Linearantrieb weiterhin eine Seilführung mit mehreren Umlenkrollen zur Führung des Seils auf, wobei diese wie folgt aufeinanderfolgen: Ausgang der Seiltrommel; erste Umlenkrolle (um das Seil parallel zur vorgesehenen Bewegungsrichtung der optischen Abtasteinheit auszurichten); erste Kopplungsvorrichtung; zweite Umlenkrolle (um das Seil im wesentlichen um 180° umzulenken); dritte und vierte Umlenkrolle (um das Seil zweimal um 90° umzulenken, so daß das Seil wieder parallel zur vorgesehenen Bewegungsrichtung der optischen Abtasteinheit ausgerichtet ist); zweite Kopplungsvorrichtung; fünfte und sechste Umlenkrolle (um das Seil um jeweils 90° umzulenken, so daß es wieder parallel zur vorgesehenen Bewegungsrichtung der optischen Abtasteinheit verläuft); siebte Umlenkrolle (um das Seil zur Seiltrommel zurückzuführen). Durch diese Art der Seilführung wird eine besonders konstante Bewegung der beiden Kopplungsvorrichtungen, über die die optische Abtasteinheit mit dem Seil verbunden ist, sichergestellt.

Bevorzugt wird als Motor ein Schrittmotor verwendet, dessen mittlere Drehzahl frei programmiert werden kann. Ein derartiger Motor umfaßt weiterhin keine Schleifkontakte, so daß ein minimaler Verschleiß bei langer Lebensdauer gewährleistet werden kann.

Gemäß einem weiteren Aspekt betrifft die vorliegende Erfindung auch eine optische Abtastvorrichtung mit einer optischen Abtasteinheit und einem erfindungsgemäßen Linearantrieb. Eine besonders bevorzugte Ausführungsform einer derartigen erfindungsgemäßen optischen Abtastvorrichtung weist eine bewegliche Lagerung der optischen Abtasteinheit auf, die insbesondere als Gleit-, Wälz- oder Luftlagerung ausgeführt ist.

Weitere vorteilhafte Weiterbildungen der Erfindung sind in den Unteransprüchen definiert.

Ausführungsbeispiele der Erfindung werden im Folgenden unter Hinweis auf die beigefügten Zeichnungen näher beschrieben. Es stellen dar:
- Figur 1: eine schematische Darstellung einer erfindungsgemäßen optischen Abtastvorrichtung mit einem erfindungsgemäßen Linearmotor gemäß einer ersten Ausführungsform,
- Figur 2: eine vergrößerte Darstellung einer Seiltrommel von Figur 1,
- Figur 3: Seitenansicht eines Teils eines erfindungsgemäßen Linearmotors gemäß einer zweiten Ausführungsform, und
- Figur 4: isometrische Ansicht von Fig. 3.

Im Folgenden werden für gleiche und gleichwirkende Elemente der verschiedenen Ausführungsbeispiele durchweg gleiche Bezugszeichen verwendet.

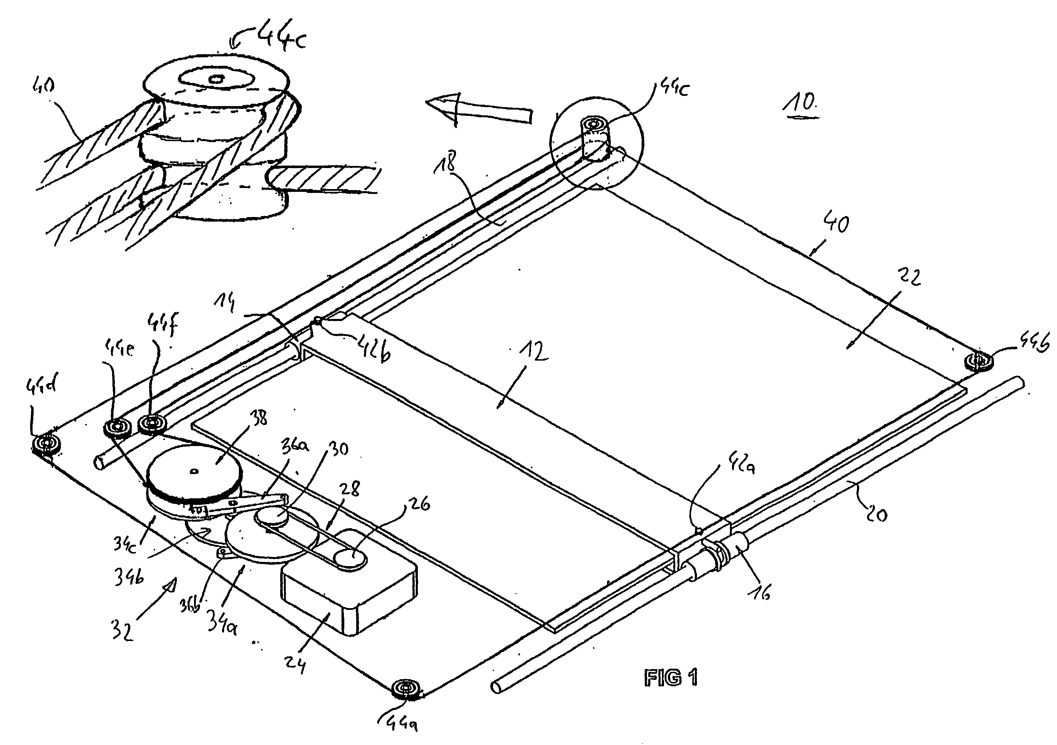

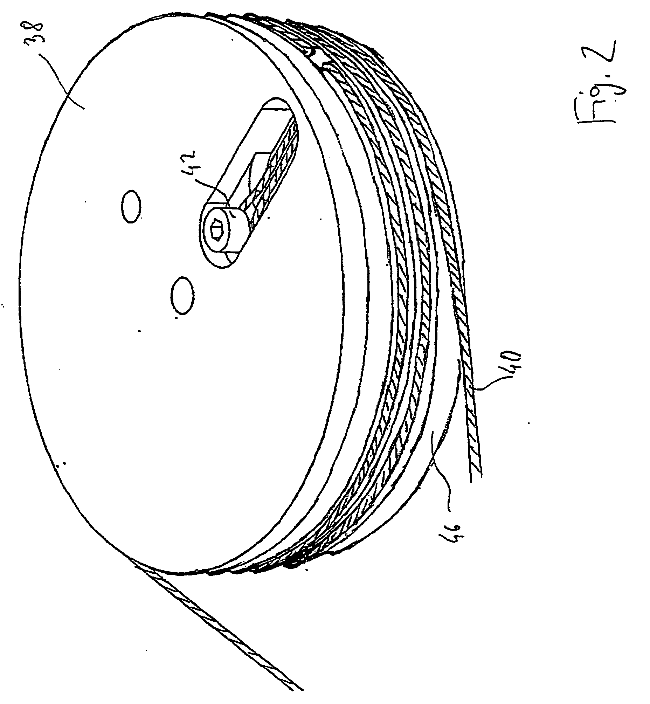

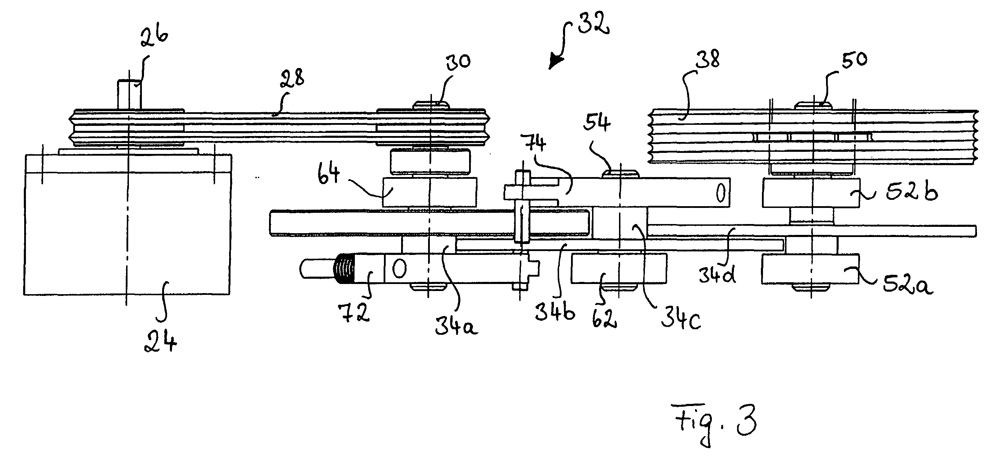

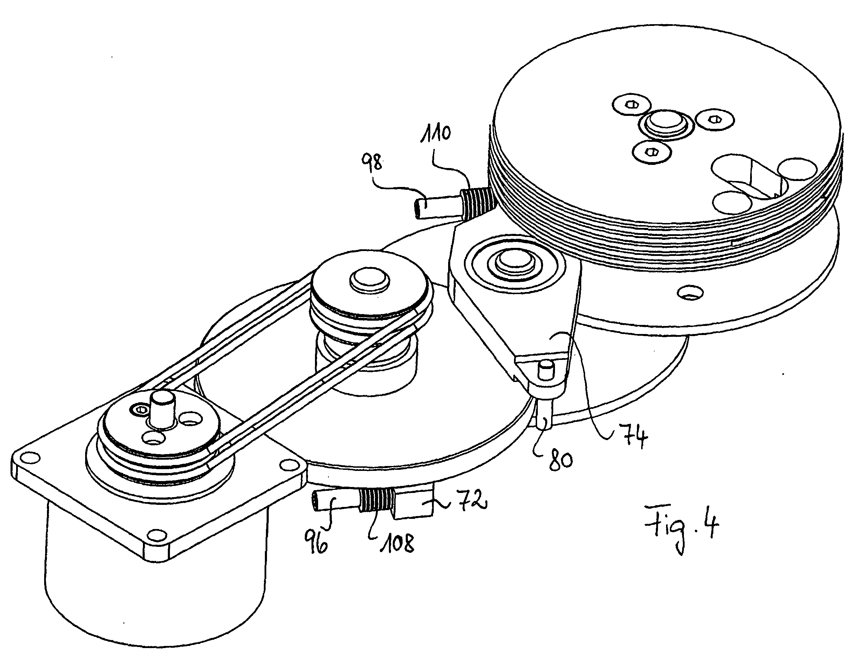

Die in Fig. 1 dargestellte optische Abtastvorrichtung 10 umfaßt einen Abtastkopf 12, der über zwei Lager 14, 16 beweglich an zwei Führungsstangen 18, 20 gelagert ist. Der Abtastkopf 12 liegt einer abzutastenden Bildplatte 22 - beispielsweise einer Röntgenplatte - gegenüber. Der Abtastkopf wird bewegt durch einen Linearantrieb, der durch verschiedene Bauelemente gebildet wird: ein Schrittmotor 24 treibt über eine Ausgangswelle 26 einen elastischen Riemen 28 an, der wiederum mit der Eingangswelle 30 eines Reibradgetriebes 32 gekoppelt ist. Das Reibradgetriebe, dessen prinzipieller Aufbau in Zusammenhang mit Fig. 3 und Fig. 4 noch detaillierter beschrieben wird, umfaßt mehrere Reibräder 34a bis 34c, wovon ein Reibrad als Schwungscheibe ausgebildet ist. Die Reibräder sind als gehärtete Stahlräder ausgebildet, die über einseitig eingespannte Schwingen 36a, 36b federnd aufeinandergepreßt werden. Die Reibräder 34a bis 34c sind in einem Getriebegehäuse (nicht dargestellt) untergebracht und laufen in einem Ölbad. Die Ausgangswelle des Reibradgetriebes 32, auf der das letzte Reibrad angeordnet ist, ist mit einer Seiltrommel 38 gekoppelt, die detaillierter in Fig. 2 dargestellt ist. Während die Ausgangwelle 26 des Motors 24 auf hohem Drehzahlniveau rotiert, ist das Reibradgetriebe 32 so ausgebildet, daß eine Umsetzung in eine langsame Rotation der Seiltrommel 38 bewirkt wird. An der Seiltrommel 38 ist ein Seil 40 befestigt, das seinerseits über zwei Koppelvorrichtungen 42a, 42b mit dem Abtastkopf 12 verbunden ist. Eine Rotation der Seiltrommel 38 führt zu einer linearen Bewegung des Seils 40, welches über mehrere Umlenkrollen 44a bis 44f geführt wird. Die Seilführung an der Umlenkrolle 44c ist in Fig. 1 zur Verdeutlichung in vergrößertem Maßstab dargestellt.

Fig. 2 zeigt eine detailliertere Darstellung der Führung des Seils 40 auf der Seiltrommel 38. Zu erkennen ist, daß das Seil 40 über eine Schraube 42 an der Seiltrommel 38 fixiert ist. Auf der Umfangsoberfläche der Seiltrommel 38 ist eine schraublinienförmige Nut 46 zur Führung des Seils 40 derart ausgebildet, daß keine Berührung zwischen benachbarten Seilabschnitten erfolgt.

Fig. 3 zeigt eine Seitenansicht eines Teils eines erfindungsgemäßen Linearantriebs. Zu erkennen ist der Motor 24 mit seiner Ausgangswelle 26, die über den elastischen Riemen 28 die Eingangswelle 30 des Reibradgetriebes 32 in Rotation versetzt. Das in Fig. 3 dargestellte Reibradgetriebe 32 ist eine Weiterentwicklung des für die Inhaberin der vorliegenden Anmeldung im deutschen Patent DE 40 21 660 C1 geschützten Getriebes. In einem nicht dargestellten Gehäuse sind mehrere Reibräder 34a bis 34d angeordnet. Die Ausgangswelle 50 des Reibradgetriebes ist über zwei Festlager 52a, 52b im Gehäuse drehbar gelagert. Die Eingangswelle 30 sowie die Welle 54 sind jeweils an einem Ende mittels eines im Gehäuse angeordneten Festlagers 62, 64 drehbar gelagert. Das jeweils andere Ende der Reibradwellen 30 und 54 ist in einem nicht gezeigten Festlager drehbar gelagert, die jeweils auf einem Schwinghebel 72, 74 angeordnet sind. Mit Bezug auf Fig. 4 wird deutlich, daß die Schwinghebel 72 und 74 drehbar um Achsen 78 (nicht gezeigt) und 80 gelagert sind, die fest mit dem Gehäuse verbunden sind. An einem der jeweiligen

Drehachse 78 und 80 des jeweiligen Schwinghebels 72 und 74 gegenüberliegenden Ende ist jeweils eine Nase angeformt, die jeweils eine Durchgangsbohrung für eine Stellschraube 96 und 98 aufweist. Die Stellschrauben 96 und 98 sind im Gehäuse einschraubbar gelagert. Zwischen den Stellschrauben 96 und 98 und den Schwinghebeln 72 und 74 ist jeweils eine Feder 108 und 110 angeordnet, mit der der Druck eingestellt werden kann, indem ein Reibrad mit kleinem Durchmesser 34a, 34c auf ein Reibrad mit großem Durchmesser 34b, 34d gedrückt wird.

Die Ausgangswelle 50 des Reibradgetriebes ist direkt mit der Seiltrommel 38 verbunden.

## Patentansprüche

1. Linearantrieb für eine optische Abtasteinheit umfassend
- einen Motor (24) mit einer Ausgangswelle (26);
- eine Seilantriebsvorrichtung (38), die ein Seil (40) umfaßt und derart mit dem Motor (24) gekoppelt ist, daß eine rotatorische Bewegung der Ausgangswelle (26) des Motors (24) in eine lineare Bewegung des Seils (40) umgesetzt wird; und
- mindestens eine Kopplungsvorrichtung (42a; 42b), mit der das Seil (40) mit einer optischen Abtasteinheit (12) gekoppelt werden kann, so daß eine Bewegung des Seils (40) in eine Bewegung der optischen Abtasteinheit (12) umgesetzt werden kann;
**dadurch gekennzeichnet,**
**daß** er weiterhin ein Reibradgetriebe (32) aufweist, das eingangsseitig mit der Ausgangswelle (26) des Motors (24) und ausgangsseitig mit der Seilantriebsvorrichtung (38) gekoppelt ist.

2. Linearantrieb nach Anspruch 1, **dadurch gekennzeichnet, daß** das Reibradgetriebe (32) eine Eingangswelle (30) aufweist und der Linearantrieb ein bandförmiges Element (28) aufweist, mit dem die Ausgangswelle (26) des Motors (24) und die Eingangswelle (30) des Reibradgetriebes (32) derart gekoppelt sind, daß eine Rotation der Ausgangswelle (26) des Motors (24) in eine Rotation der Eingangswelle (30) des Reibradgetriebes (32) umgesetzt wird.

3. Linearantrieb nach Anspruch 2, **dadurch gekennzeichnet, daß** das Reibradgetriebe (32) mehrere Reibräder (34a bis 34d) aufweist und mindestens ein Reibrad, insbesondere das auf der Eingangswelle (30) des Reibradgetriebes (32) angeordnete Reibrad, ist als Schwungrad ausgebildet.

4. Linearantrieb nach einem der vorhergehenden Ansprüche, **dadurch gekennzeichnet, daß** er mindestens zwei Kopplungsvorrichtungen (42a, 42b) aufweist, die derart angeordnet sind, daß das Seil (40) mit zwei Seiten der optischen Abtasteinheit (12) gekoppelt werden kann, so daß sich die zwei Seiten in einer Richtung senkrecht zur vorgesehenen Bewegungsrichtung der optischen Abtasteinheit (12) gegenüberliegen.

5. Linearantrieb nach einem der vorhergehenden Ansprüche, **dadurch gekennzeichnet, daß** jedes Reibrad (34a bis 34d) auf einer Welle (30, 54, 50) angeordnet ist, wobei mindestens eine der Wellen (30, 54, 50) bevorzugt alle Wellen, über einseitig federnd eingespannte Schwinghebel (72, 74) beweglich gelagert sind.

6. Linearantrieb nach einem der vorhergehenden Ansprüche, **dadurch gekennzeichnet, daß** das Reibradgetriebe (32) mehrere Reibräder aufweist, wobei von zwei unmittelbar zusammenwirkenden Reibrädern eines (34b, 34d) von balliger Form ist.

7. Linearantrieb nach einem der vorhergehenden Ansprüche, **dadurch gekennzeichnet, daß** das Reibradgetriebe (32) eine Ausgangswelle (50) und die Seilantriebsvorrichtung eine Seiltrommel (38) aufweist, wobei die Seiltrommel (38) derart mit der Ausgangswelle (50) des Reibradgetriebes (32) gekoppelt ist, daß eine rotatorische Bewegung der Ausgangswelle (50) des Reibradgetriebes (32) in eine rotatorische Bewegung der Seiltrommel (38) umgesetzt wird.

8. Linearantrieb nach einem der vorhergehenden Ansprüche, **dadurch gekennzeichnet, daß** das Seil (40) an der Seiltrommel (38) fixiert ist, wobei die Seiltrommel (38) bevorzugt eine schraublinienförmige Nut (46) aufweist, in der das Seil (40) zur Umsetzung einer rotatorischen Bewegung der Seiltrommel (38) in eine lineare Bewegung des Seils (40) führbar ist.

9. Linearantrieb nach einem der vorhergehenden Ansprüche, **dadurch gekennzeichnet, daß** er weiterhin eine Seilführung mit mehreren Umlenkrollen (44a bis 44f) zur Führung des Seils (40) aufweist, wobei diese bevorzugt wie folgt angeordnet sind: Ausgang der Seiltrommel (38); erste Umlenkrolle (44f), um das Seil (40) parallel zur vorgesehenen Bewegungsrichtung der optischen Abtasteinheit (12) auszurichten; erste Kopplungsvorrichtung (42b); zweite Umlenkrolle (44c), um das Seil (40) im wesentlichen um 180° umzulenken; dritte und vierte Umlenkrolle (44d, 44a), um das Seil (40) zweimal um 90° umzulenken, so daß das Seil (40) wieder parallel zur vorgesehenen Bewegungsrichtung der optischen Abtasteinheit (12) ausgerichtet ist; zweite Kopplungsvorrichtung (42a); fünfte und sechste Umlenkrolle (44b, 44c), um das Seil (40) um jeweils 90° umzulenken, so daß es wieder parallel zur vorgesehenen Bewegungsrichtung der optischen Abtasteinheit (12) verläuft; siebte Umlenkrolle (44e), um das Seil (38) zur Seiltrommel zurückzuführen.

10. Linearantrieb nach einem der vorhergehenden Ansprüche, **dadurch gekennzeichnet, daß** der Motor (24) als Schrittmotor ausgebildet ist.

11. Optische Abtastvorrichtung mit einer optischen Abtasteinheit (12) und einem Linearantrieb (10) nach einem der Ansprüche 1 bis 10.

12. Optische Abtastvorrichtung nach Anspruch 11, **dadurch gekennzeichnet, daß** sie weiterhin eine bewegliche Lagerung (14, 16) der optischen Abtasteinheit (12) aufweist, die insbesondere als Gleit-, Wälz- oder Luftlagerung ausgeführt ist.

## Claims

1. Linear drive for an optical scanning unit, comprising
- a motor (24) with an output shaft (26) ;
- a cable drive device (38), which comprises a cable (40) and is coupled to the motor (24) so that a rotary movement of the output shaft (26) of the motor (24) is converted into a linear movement of the cable (40) ; and
- at least one coupling device (42a, 42b), by which the cable (40) can be coupled to an optical scanning unit (12) so that a movement of the cable (40) can be converted into a movement of the optical scanning unit (12); **characterised in that**
it furthermore has a friction wheel drive (32), which is coupled to the output shaft (26) of the motor (24) on the input side and to the cable drive device (38) on the output side.

2. Linear drive according to Claim 1, **characterised in that** the friction wheel drive (32) has an input shaft (30) and the linear drive has a band-like element (28), by which the output shaft (26) of the motor (24) and the input shaft (30) of the friction wheel drive (32) are coupled so that a rotation of the output shaft (26) of the motor (24) is converted into a rotation of the input shaft (30) of the friction wheel drive (32)

3. Linear drive according to Claim 2, **characterised in that** the friction wheel drive (32) has a plurality of friction wheels (34a to 34d) and at least one friction wheel, in particular the friction wheel arranged on the input shaft (30) of the friction wheel drive (32), is designed as a flywheel.

4. Linear drive according to one of the preceding claims, **characterised in that** it has at least two coupling devices (42a, 42b), which are arranged so that the cable (40) can be coupled to two sides of the optical scanning unit (12) such that the two sides lie opposite one another in a direction perpendicular to the intended movement direction of the optical scanning unit (12).

5. Linear drive according to one of the preceding claims, **characterised in that** each friction wheel (34a to 34d) is arranged on a shaft (30, 54, 50), at least one of the shafts (30, 54, 50), and preferably all the shafts, being movably mounted by means of rocker arms (72, 74) clamped resiliently on one side.

6. Linear drive according to one of the preceding claims, **characterised in that** the friction wheel drive (32) has a plurality of friction wheels, one (34b, 34d) of each two directly interacting friction wheels being of convex shape.

7. Linear drive according to one of the preceding claims, **characterised in that** the friction wheel drive (32) has an output shaft (50) and the cable drive device has a cable drum (38), the cable drum (38) being coupled to the output shaft (50) of the friction wheel drive (32) so that a rotary movement of the output shaft (50) of the friction wheel drive (32) is converted into a rotary movement of the cable drum (38).

8. Linear drive according to one of the preceding claims, **characterised in that** the cable (40) is fixed to the cable drum (38), the cable drum (38) preferably having a helical groove (46) in which the cable (40) can be guided in order to convert a rotary movement of the cable drum (38) into a linear movement of the cable (40).

9. Linear drive according to one of the preceding claims, **characterised in that** it furthermore has a cable guide with a plurality of deviating rollers (44a to 44f) for guiding the cable (40), these preferably being arranged as follows: output of the cable drum (38); first deviating roller (44f) for aligning the cable (40) parallel to the intended movement direction of the optical scanning unit (12); first coupling device (42b); second deviating roller (44c) for deviating the cable (40) essentially through 180°; third and fourth deviating rollers (44d, 44a) for deviating the cable (40) twice through 90° so that the cable (40) is again aligned parallel to the intended movement direction of the optical scanning unit (12); second coupling device (42a); fifth and sixth deviating rollers (44b, 44c) for deviating the cable (40) through 90° in each case so that it again extends parallel to the intended movement direction of the optical scanning unit (12); seventh deviating roller (44e) for feeding the cable (38) back to the cable drum.

10. Linear drive according to one of the preceding claims, **characterised in that** the motor (24) is designed as a stepper motor.

11. Optical scanning device with an optical scanning unit (12) and a linear drive (10) according to one of Claims 1 to 10.

12. Optical scanning device according to Claim 11, **characterised in that** it furthermore has a movable bearing (14, 16) for the optical scanning unit (12), which is designed in particular as a sliding, roller or air-lubricated bearing.

## Revendications

1. Entraînement linéaire pour une unité de balayage optique, comportant
- un moteur (24) avec un arbre de sortie (26) ;
- un dispositif d'entraînement (38) à câble comportant un câble (40), et qui est couplé au moteur (24) de telle sorte qu'un mouvement de rotation de l'arbre de sortie (26) du moteur (24) soit converti en un mouvement linéaire du câble (40) ; et
- au moins un dispositif d'accouplement (42a ; 42b) avec lequel le câble (40) peut être couplé à une unité de balayage optique (12), de sorte qu'un mouvement du câble (40) puisse être converti en un mouvement de l'unité de balayage optique (12) ;
**caractérisé en ce que**
il comporte en outre une transmission (32) à roues de friction qui est couplée, du côté de l'entrée à l'arbre de sortie (26) du moteur (24), et du côté de la sortie au dispositif d'entraînement (38) à câble.

2. Entraînement linéaire selon la revendication 1, **caractérisé en ce que** la transmission (32) à roues de friction comporte un arbre d'entrée (30), et **en ce que** l'entraînement linéaire comporte un élément en forme de bande (28) avec lequel l'arbre de sortie (26) du moteur (24), et l'arbre d'entrée (30) de la transmission (32) à roues de friction, sont couplés de telle sorte qu'une rotation de l'arbre de sortie (26) du moteur (24) soit convertie en une rotation de l'arbre d'entrée (30) de la transmission (32) à roues de friction.

3. Entraînement linéaire selon la revendication 2, **caractérisé en ce que** la transmission (32) à roues de friction comporte plusieurs roues de friction (34a à34d), et **en ce qu'**au moins une roue de friction, notamment la roue de friction disposée sur l'arbre d'entrée (30) de la transmission (32) à roues de friction, est réalisée sous la forme d'un volant d'inertie.

4. Entraînement linéaire selon l'une quelconque des revendications précédentes, **caractérisé en ce qu'**il comporte au moins deux dispositifs d'accouplement (42a, 42b), qui sont disposés de telle sorte que le câble (40) puisse être couplé à deux côtés de l'unité de balayage optique (12), de sorte que les deux côtés de l'unité de balayage optique (12) soient situés l'un en face de l'autre, dans une direction perpendiculaire au sens de déplacement prévu .

5. Entraînement linéaire selon l'une quelconque des revendications précédentes, **caractérisé en ce que** chaque roue de friction (34a à 34d) est disposée sur un arbre (30, 54, 50), l'un au moins des arbres (30, 54, 50), de préférence tous les arbres, étant montés de façon mobile par l'intermédiaire de leviers oscillants (72, 74) fixés de façon élastique d'un côté.

6. Entraînement linéaire selon l'une quelconque des revendications précédentes, **caractérisé en ce que** la transmission (32) à roues de friction comporte plusieurs roues de friction, l'une des deux roues de friction (34b, 34d) agissant directement ensemble ayant une forme bombée.

7. Entraînement linéaire selon l'une quelconque des revendications précédentes, **caractérisé en ce que** la transmission (32) à roues de friction comporte un arbre de sortie (50), et **en ce que** le dispositif d'entraînement à câble comporte un tambour de câble (38), le tambour de câble (38) étant couplé à l'arbre de sortie (50) de la transmission (32) à roues de friction de telle sorte qu'un mouvement de rotation de l'arbre de sortie (50) de la transmission (32) à roues de friction soit converti en un mouvement de rotation du tambour de câble (38).

8. Entraînement linéaire selon l'une quelconque des revendications précédentes, **caractérisé en ce que** le câble (40) est fixé sur le tambour de câble (38), le tambour de câble (38) comportant de préférence une rainure hélicoïdale (46), dans laquelle le câble (40) peut être guidé pour la conversion d'un mouvement de rotation du tambour de câble (38) en un mouvement linéaire du câble (40).

9. Entraînement linéaire selon l'une quelconque des revendications précédentes, **caractérisé en ce qu'**il comporte en outre un guidage de câble avec plusieurs poulies de renvoi (44a à 44f) pour le guidage du câble (40), celles-ci étant de préférence disposées comme suit : sortie du tambour de câble (38) ; première poulie de renvoi (44f), afin d'orienter le câble (40) parallèlement au sens de déplacement prévu de l'unité de balayage optique (12) ; premier dispositif d'accouplement (42b) ; deuxième poulie de renvoi (44c), afin de dévier le câble (40) sensiblement de 180° ; troisième et quatrième poulies de renvoi (44d, 44a), afin de dévier le câble (40) deux fois de 90°, de sorte que le câble (40) soit à nouveau orienté parallèlement au sens de déplacement prévu de l'unité de balayage optique (12) ; deuxième dispositif d'accouplement (42a) ; cinquième et sixième poulies de renvoi (44b, 44c), afin de dévier le câble (40) de 90°, de sorte qu'il soit à nouveau parallèle au sens de déplacement prévu de l'unité de balayage optique (12) ; septième poulie de renvoi (44e), afin de ramener le câble (38) vers le tambour de câble.

10. Entraînement linéaire selon l'une quelconque des revendications précédentes, **caractérisé en ce que** le moteur (24) est réalisé sous la forme d'un moteur pas à pas.

11. Dispositif de balayage optique comportant une unité de balayage optique (12) et un entraînement linéaire (10) selon l'une quelconque des revendications 1 à 10.

12. Dispositif de balayage optique selon la revendication 11, **caractérisé en ce qu'**il comporte en outre un palier mobile (14, 16) de l'unité de balayage optique (12), qui est notamment réalisé sous la forme d'un palier à glissement, à roulement ou pneumatique.
